(19) Europäisches Patentamt
European Patent Office
Office européen des brevets

(11) **EP 4 786 197 A1**

(12) **EUROPEAN PATENT APPLICATION**
published in accordance with Art. 153(4) EPC

(43) Date of publication:
05.08.2026 Bulletin 2026/32

(21) Application number: 24871666.4

(22) Date of filing: 27.08.2024

(51) International Patent Classification (IPC):
**B41M 5/00** *(2006.01)*   **B41J 2/01** *(2006.01)*
**C09D 11/322** *(2014.01)*

(52) Cooperative Patent Classification (CPC):
**B41J 2/01; B41M 5/00; C09D 11/322**

(86) International application number:
**PCT/JP2024/030523**

(87) International publication number:
**WO 2025/069865 (03.04.2025 Gazette 2025/14)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 27.09.2023 JP 2023166468

(71) Applicant: FUJIFILM Corporation
Tokyo 106-8620 (JP)

(72) Inventors:
• KARIYA, Toshihiro
Ashigarakami-gun
Kanagawa
2588577 (JP)

• SATO, Ayato
Ashigarakami-gun
Kanagawa
2588577 (JP)
• ARAI, Takuya
Ashigarakami-gun
Kanagawa
2588577 (JP)

(74) Representative: HGF
HGF Limited
4th Floor, 1 City Square
Leeds LS1 2ES (GB)

(54) **PRETREATMENT LIQUID FOR INKJET INK, INK SET, SURFACE-TREATED SUBSTRATE, IMAGE RECORDING METHOD, LAMINATE MANUFACTURING METHOD, IMAGE RECORDED MATTER, AND LAMINATE**

(57) Provided are a pretreatment liquid for an ink jet ink, which contains resin particles, a surfactant, an aggregating agent, and water, in which the surfactant contains a compound represented by Formula (1), and the aggregating agent contains at least one selected from the group consisting of a polyvalent metal compound and an organic acid, and applications thereof. Formula (1) is $H(OCH_2CH_2)_x(OCH(CH_3)CH_2)_y(OCH_2CH_2)_z\text{-}OH$, in Formula (1), x and z are each independently an integer of 1 or more, y is an integer of 1 to 500, and x + z is an integer of 2 to 1,000.

EP 4 786 197 A1

**Description**

**BACKGROUND OF THE INVENTION**

1. Field of the Invention

The present disclosure relates to a pretreatment liquid for an ink jet ink, an ink set, a surface-treated base material, an image recording method, a manufacturing method of a laminate, a printed material, and a laminate.

2. Description of the Related Art

In recent years, various studies have been made on a pretreatment liquid used for image recording on an impermeable base material.

For example, JP2021-91765A discloses a pretreatment liquid used together with an aqueous ink jet ink containing a pigment and water, in which the pretreatment liquid contains an aggregating agent (A), a surfactant (B), a resin (C), and water, the aggregating agent (A) contains at least one or more selected from the group consisting of a metal salt and a cationic polymer compound, and the surfactant (B) contains a specific polyoxyalkylene alkylamine.

JP2002-79739A discloses that, in a pretreatment liquid for a colorless or light-colored recorded material, which contains 10% to 80% by weight of a compound that decreases solubility or dispersibility of a recording liquid and has a viscosity of 10 to 10,000 mPa·s at 25°C, a surfactant having an ethylene oxide chain and a propylene oxide chain is used.

**SUMMARY OF THE INVENTION**

A laminate may be manufactured by applying a pretreatment liquid for an ink jet ink and an ink jet ink in this order onto an impermeable base material to record an image and obtain a printed material, and then laminating a surface of the obtained printed material on an image side with a base material for lamination. In a case where an ink jet ink is applied onto a pretreatment layer formed of the pretreatment liquid, a dot (dot diameter) may spread insufficiently, and thus a streak may occur in an image. Therefore, it may be required to further spread the dot diameter. In addition, in the manufacturing of the laminate, it may be required to improve a lamination strength between the base material for lamination and the printed material.

The present disclosure has been made in view of such circumstances, and an object to be achieved by one embodiment of the present disclosure is to provide a pretreatment liquid for an ink jet ink, an ink set, and an image recording method, which can further spread a dot of the ink jet ink to be applied and can obtain a laminate having excellent lamination strength.

Another object to be achieved by another embodiment of the present disclosure is to provide a printed material, a surface-treated base material, a laminate, and a manufacturing method of a laminate, using the pretreatment liquid for an ink jet ink.

The present disclosure includes the following aspects.

<1> A pretreatment liquid for an ink jet ink, including:

resin particles;
a surfactant;
an aggregating agent; and
water,
in which the surfactant contains a compound represented by Formula (1), and
the aggregating agent contains at least one selected from the group consisting of a polyvalent metal compound and an organic acid.

$$H(OCH_2CH_2)_x(OCH(CH_3)CH_2)_y(OCH_2CH_2)_z\text{-OH}: \qquad (1)$$

In Formula (1), x and z are each independently an integer of 1 or more, y is an integer of 1 to 500, and x + z is an integer of 2 to 1,000.

<2> The pretreatment liquid for an ink jet ink according to <1>, in which the compound represented by Formula (1) has an HLB value of 15.0 or less.
<3> The pretreatment liquid for an ink jet ink according to <1> or <2>, in which the compound represented by Formula (1) has a cloud point of 50°C or higher.

<4> The pretreatment liquid for an ink jet ink according to any one of <1> to <3>, in which the resin particles are particles containing a urethane resin.

<5> The pretreatment liquid for an ink jet ink according to <4>, in which the particles containing the urethane resin are particles containing at least one selected from the group consisting of a polyether urethane resin and a polycarbonate urethane resin.

<6> The pretreatment liquid for an ink jet ink according to <4>, in which the urethane resin contained in the resin particles contains a unit derived from a polycyclic aliphatic diol.

<7> The pretreatment liquid for an ink jet ink according to any one of <1> to <6>, in which a proportion of a total formula weight of $(OCH_2CH_2)_x$ and $(OCH_2CH_2)_z$ relative to a molecular weight of the compound represented by Formula (1) is 15% to 50%.

<8> The pretreatment liquid for an ink jet ink according to any one of <1> to <7>, in which a content of the compound represented by Formula (1) is 0.5% by mass to 3% by mass with respect to a total amount of the pretreatment liquid for an ink jet ink.

<9> The pretreatment liquid for an ink jet ink according to any one of <1> to <8>, in which a mass ratio of a content of the compound represented by Formula (1) to a content of the resin particles is 0.05 to 0.50.

<10> The pretreatment liquid for an ink jet ink according to any one of <1> to <9>, which is used for image recording on an impermeable base material.

<11> An ink set including:

the pretreatment liquid for an ink jet ink according to any one of <1> to <10>; and
an ink jet ink containing water and a pigment.

<12> A surface-treated base material including:

an impermeable base material; and
a pretreatment layer disposed on the impermeable base material, the pretreatment layer containing a solid content of the pretreatment liquid for an ink jet ink according to any one of <1> to <10>.

<13> An image recording method including:

a step of applying the pretreatment liquid for an ink jet ink according to any one of <1> to <10> onto an impermeable base material; and
a step of applying an ink jet ink containing water and a pigment onto the impermeable base material to which the pretreatment liquid for an ink jet ink has been applied, using an ink jet recording method, to record an image.

<14> A manufacturing method of a laminate, including:

a step of obtaining a printed material that includes the impermeable base material and an image disposed on the impermeable base material by the image recording method according to <13>; and
a step of laminating a base material for lamination on a side of the printed material on which the image is disposed, to obtain a laminate.

<15> A printed material including:

an impermeable base material; and an image disposed on the impermeable base material,
in which the image includes
a pretreatment layer containing a solid content of the pretreatment liquid for an ink jet ink according to any one of <1> to <10>, and
an ink layer disposed on the pretreatment layer and containing a pigment.

<16> A laminate including:

the printed material according to <15>; and
a base material for lamination that laminates a side of the printed material on which the image is provided.

According to the embodiment of the present disclosure, the pretreatment liquid for an ink jet ink, the ink set, and the image recording method, which can further spread a dot of the ink jet ink to be applied and can obtain a laminate having excellent lamination strength, are provided.

According to the other embodiment of the present disclosure, the printed material, the laminate, and the manufacturing method of the laminate, using the pretreatment liquid for the ink jet ink, are provided.

## DESCRIPTION OF THE PREFERRED EMBODIMENTS

Hereinafter, a pretreatment liquid for an ink jet ink, an ink set, a surface-treated base material, an image recording method, a manufacturing method of a laminate, a printed material, and a laminate according to the embodiment of the present disclosure will be described in detail.

In the present specification, a numerical range shown using "to" indicates a range including the numerical values described before and after "to" as a minimum value and a maximum value, respectively.

In a numerical range described in a stepwise manner in the present specification, an upper limit or a lower limit described in a certain numerical range may be replaced with an upper limit or a lower limit in another numerical range described in a stepwise manner. Further, in a numerical range described in the present specification, an upper limit or a lower limit described in a certain numerical range may be replaced with a value described in an example.

In the present specification, in a case where a plurality of substances corresponding to respective components in a composition are present, the amount of the respective components in the composition indicates the total amount of the plurality of substances present in the composition unless otherwise specified.

In the present specification, a combination of two or more preferred embodiments is a more preferred embodiment.

In the present specification, the meaning of the term "step" includes not only an independent step but also a step whose intended purpose is achieved even in a case where the step cannot clearly be distinguished from other steps.

In the present specification, the term "image" denotes an entire film formed by applying a pretreatment liquid and an ink in this order, and the term "image recording" denotes formation of an image (that is, the film).

Further, the concept of "image" in the present specification also includes a solid image.

In the present specification, the concept of "(meth)acrylate" includes both acrylate and methacrylate. In addition, the concept "(meth)acryl" includes both acryl and methacryl.

[Pretreatment liquid for ink jet ink]

The pretreatment liquid for an ink jet ink according to the embodiment of the present disclosure (hereinafter, also referred to as a "pretreatment liquid") contains resin particles, a surfactant, an aggregating agent, and water, in which the surfactant contains a compound represented by Formula (1) (hereinafter, also referred to as a "compound (1)"), and the aggregating agent contains at least one selected from the group consisting of a polyvalent metal compound and an organic acid.

$$H(OCH_2)_x(OCH(CH_3)CH_2)_y(OCH_2)_z\text{-}OH: \qquad (1)$$

In Formula (1), x and z are each independently an integer of 1 or more, y is an integer of 1 to 500, and x + z is an integer of 2 to 1,000.

With the pretreatment liquid according to the embodiment of the present disclosure, in a case where a laminate is manufactured by laminating a surface of an image recorded on a base material using a base material for lamination, a printed material including the base material and the image recorded on the base material is obtained, in which the spreading of a dot forming the image is favorably maintained and the lamination strength is excellent.

Here, the lamination strength denotes peel strength in a case of peeling the base material for lamination and the printed material from the laminate formed by lamination [that is, the laminate having a laminated structure of "base material for lamination/printed material" (specifically, a laminated structure of "base material for lamination/ink layer (image)/pretreatment layer/base material")].

In addition, with the pretreatment liquid according to the embodiment of the present disclosure, the dot of the ink applied onto the pretreatment layer formed of the pretreatment liquid can be further spread.

The reason why the above-described effect is exhibited by the pretreatment liquid according to the embodiment of the present disclosure is presumed as follows.

In order to improve the lamination strength in the laminate, it is necessary to improve the adhesiveness between the base material and the pretreatment layer as a premise.

In a case where the ink contains a surfactant having high hydrophilicity, the dot diameter of the ink applied onto the pretreatment layer is increased, but the adhesiveness between the base material and the pretreatment layer is decreased, and the lamination strength may not be obtained. In addition, in a case where the ink contains a surfactant having high hydrophobicity, the adhesiveness between the base material and the pretreatment layer is not affected, but the dot of the ink applied onto the pretreatment layer is less likely to spread, and the image tends to have streaks.

On the other hand, the pretreatment liquid according to the embodiment of the present disclosure contains the compound (1), and the compound (1) has both an ethylene oxide chain which is a hydrophilic group and a propylene oxide chain which is a hydrophobic group. It is considered that the presence of the hydrophobic group in the compound (1) maintains the adhesiveness between the base material and the pretreatment layer. In addition, it is considered that, in a case where the ink is applied onto the pretreatment layer, the wetting property of the ink is efficiently improved by the presence of the hydrophilic group at both terminals of the compound (1), and the dot spreads. As a result, the spreading of the dot in the image and the adhesiveness can be improved in a balanced manner.

On the other hand, in the pretreatment liquid described in JP2021-91765A, both terminals of the surfactant are a propylene oxide chain. In addition, the pretreatment liquid described in JP2002-79739A does not contain resin particles. Therefore, in the pretreatment liquids described in JP2021-91765A and JP2002-79739A, the effect of the spreading of the dot and the lamination strength cannot be obtained.

Hereinafter, each component contained in the pretreatment liquid according to the embodiment of the present disclosure will be described.

The pretreatment liquid according to the embodiment of the present disclosure contains resin particles, a surfactant, an aggregating agent, and water.

(Surfactant)

The pretreatment liquid contains a surfactant.

The surfactant contains the compound (1).

$$H(OCH_2CH_2)_x(OCH(CH_3)CH_2)_y(OCH_2CH_2)_z\text{-OH:} \qquad (1)$$

In Formula (1), x and z are each independently an integer of 1 or more, y is an integer of 1 to 500, and x + z is an integer of 2 to 1,000.

The compound (1) has both an ethylene oxide chain which is a hydrophilic group and a propylene oxide chain which is a hydrophobic group. It is considered that the presence of the hydrophobic group in the compound (1) maintains the adhesiveness between the base material and the pretreatment layer. In addition, it is considered that, in a case where the ink is applied onto the pretreatment layer, the surface of the pretreatment layer is hydrophilic due to the presence of the hydrophilic group at both terminals of the compound (1), the wetting property of the ink is improved, and the dot spreads.

From the viewpoint of ease of synthesis, it is preferable that x and z in Formula (1) are the same.

Specifically, x + z is preferably an integer of 2 to 500 and more preferably an integer of 4 to 100. In addition, y is preferably an integer of 1 to 100 and more preferably an integer of 2 to 50.

From the viewpoint of spreading the dot of the ink and improving the lamination strength, a proportion of a total formula weight of $(OCH_2CH_2)_x$ and $(OCH_2CH_2)_z$ to a molecular weight of the compound (1) is preferably 15% to 50% and more preferably 25% to 50%.

In a case where the above-described proportion is 15% or more, the surface of the pretreatment layer is hydrophilic, and the dot is likely to spread.

In a case where the above-described proportion is 50% or less, the lamination strength is improved.

The molecular weight of the compound (1) is calculated from the type and number of atoms constituting the compound (1). In addition, the total formula weight of $(OCH_2CH_2)_x$ and $(OCH_2CH_2)_z$ is a product of the formula weight of $(OCH_2CH_2)$ and the sum of x and z.

The pretreatment liquid may contain a surfactant other than the compound (1), but in order to further exhibit the effect based on the compound (1), a proportion of the compound (1) in the surfactant is preferably 80% by mass or more and more preferably 90% by mass or more.

In particular, the surfactant preferably consists of only the compound (1).

The HLB value of the compound (1) is preferably 15.0 or less and more preferably 13.0 or less. From the viewpoint of liquid stability of the pretreatment liquid, the lower limit value of the HLB value is preferably 7.0.

In a case where the HLB value is 15.0 or less, the balance between the hydrophilic group and the hydrophobic group is good, the dot is further spread, and the lamination strength is further excellent.

The HLB value is measured by the Griffin method.

The HLB value obtained by the Griffin method is a physical property value representing the degree of hydrophilicity and lipophilicity of the surfactant, and takes a value of 0 to 20. The smaller the HLB value, the higher the lipophilicity, and the larger the HLB value, the higher the hydrophilicity.

HLB value = 20 × Formula weight of hydrophilic group (ethylene oxide group) of surfactant/Molecular weight of surfactant

The cloud point of the compound (1) is preferably 50°C or higher and more preferably 60°C or higher. The upper limit value of the cloud point is not particularly limited, and is, for example, 100°C.

In a case where the cloud point is 50°C or higher, the storage stability of the pretreatment liquid is excellent.

The cloud point is measured by the following method.

99 g of ion exchange water and 1 g of a sample are uniformly dissolved. In a case where the sample is not dissolved, the sample is cooled until it is dissolved. A sample solution of about 5 mL is taken into a glass test tube, and the temperature is raised while stirring the sample solution with a thermometer immersed in the sample solution to cause turbidity in the sample solution. Thereafter, the sample solution is slowly cooled while stirring, and the temperature at which the sample solution is completely transparent is read as the cloud point.

The compound (1) is generally known as a polypropylene glycol ethylene oxide adduct, a polyoxyethylene polyoxypropylene glycol, a polyoxyethylene polyoxypropylene block polymer, or a Pluronic (registered trademark) type nonionic surfactant.

The compound (1) may be a commercially available product.

Examples of the commercially available product include: NEWPOL (registered trademark) PE series PE-61 [POE(5)POP(30)], PE-62 [POE(10)POP(30)], PE-71 [POE(5)POP(35)], PE-74 [POE(30)POP(35)], and PE-75 [POE(48) POP(35)], PE-78 [POE(150)POP(35)] manufactured by Sanyo Chemical Industries, Ltd.; ADEKA PLURONIC (registered trademark) L series L-31 [POE(3)POP(17)], L-34 [POE(16)POP(17)], L-44 [POE(20)POP(20)], L-61 [POE(5)POP(30)], L-62 [POE(10)POP(30)], L-64 [POE(25)POP(30)], L-101 [POE(8)POP(55)], and L-121 [POE(10)POP(65)] manufactured by ADEKA Corporation; ADEKA PLURONIC F series F-68 [POE(160)POP(30)], F-87 [POE(120)POP(40)], and F-127 [POE(196)POP(67)]; ADEKA PLURONIC P series P-85 [POE(54)POP(39)] and P-123 [POE(42)POP(67)]; CoRiPhol series P188 [POE(160)POP(30)] and P407 [POE(196)POP(67)] manufactured by BASF Japan Ltd.; and LUTROOL series F68 [POE(160)POP(30)] and F127 [POE(196)POP(67)].

The number in parentheses after POE means a total value of x + z in Formula (1). In addition, the number in parentheses after POP means a value of y in Formula (1).

For example, "POE(5)POP(30)" means a compound in which x + z is 5 and y is 30 in Formula (1).

A content of the compound (1) is preferably 0.5% by mass to 3% by mass and more preferably 1% by mass to 2.5% by mass with respect to the total amount of the pretreatment liquid.

In a case where the content of the compound (1) is 0.5% by mass or more, the dot of the ink is likely to spread.

In a case where the content of the compound (1) is 3% by mass or less, the lamination strength is further improved.

(Resin particles)

The pretreatment liquid contains resin particles. The adhesiveness to the base material is improved and the lamination strength is improved by the resin particles being contained in the pretreatment liquid.

The resin particles may contain one or two or more kinds of resins.

It is preferable that the resin contained in the resin particles is a water-insoluble resin.

In the present disclosure, the term "water-insoluble" in a water-insoluble resin indicates a property that the amount of a substance to be dissolved in 100 g of water at 25°C is less than 1.0 g (more preferably less than 0.5 g).

Examples of the resin constituting the resin particles include an acrylic resin and a urethane resin.

From the viewpoint that the resin particles can stably exist without being aggregated by the aggregating agent in the pretreatment liquid, the resin particles are more preferably particles containing a urethane resin.

In the present disclosure, the nonionic urethane resin means a urethane resin having no ionic property (that is, no anionic property or cationic property).

In the present disclosure, the urethane resin denotes a polymer having a urethane bond.

The urethane resin is synthesized, for example, by reacting a diol compound with a diisocyanate compound.

For details of the diol compound and the diisocyanate compound, for example, the description in paragraphs 0031 to 0036 of JP2001-247787A can be referred to.

The urethane resin may be a polyester urethane resin having an ester bond in a main chain, a polycarbonate urethane resin having a carbonate bond in a main chain, or a polyether urethane resin having an ether bond in a main chain.

Among these, from the viewpoint of improving the lamination strength, the resin particles are preferably particles containing at least one selected from the group consisting of a polyether urethane resin and a polycarbonate urethane resin.

In addition, from the viewpoint of improving the lamination strength, the resin particles are preferably urethane resin particles consisting of a urethane resin having a unit derived from a polycyclic aliphatic diol.

Examples of the polycyclic aliphatic diol include a diol having a bridged ring such as a norbornane ring, a bicyclooctane ring, a bicycloundecane ring, an adamantane ring, a tricyclodecane ring, or a tetracyclododecane ring; and a diol having a spiro ring.

Specific examples of the polycyclic aliphatic diol include 2,5-norbornane diol, bicyclo[2.2.2]octane-1,4-dimethanol, 1,3-adamantane diol, and tricyclodecane dimethanol (tricyclo[5.2.1.0(2,6)]decane dimethanol and the like).

From the viewpoint of the adhesiveness to the base material, the polycyclic aliphatic diol is preferably a diol having a tricyclodecane ring, and more preferably tricyclo[5.2.1.0(2,6)]decane dimethanol.

The weight-average molecular weight of the resin in the resin particles is preferably in a range of 1,000 to 300,000, more preferably in a range of 2,000 to 200,000, and still more preferably in a range of 5,000 to 100,000.

In the present disclosure, the weight-average molecular weight (Mw) is measured by gel permeation chromatography (GPC). The measurement according to GPC is performed by connecting three columns of TSKgeL Super HZM-H, TSKgeL Super HZ4000, and TSKgeL Super HZ2000 (all product names, manufactured by Tosoh Corporation) in series using HLC-8220GPC (manufactured by Tosoh Corporation) and tetrahydrofuran (THF) as an eluent.

Further, the measurement is performed under conditions of a sample concentration of 0.45% by mass, a flow rate of 0.35 ml/min, a sample injection volume of 10 μL, and a measurement temperature of 40°C using a differential refractive index detector. Furthermore, the calibration curve is prepared using eight samples of "F-40", "F-20", "F-4", "F-1", "A-5000", "A-2500", "A-1000", and "n-propylbenzene" which are "Standard Samples TSK standard, polystyrene" (manufactured by Tosoh Corporation).

From the viewpoint of the jetting stability, the average particle diameter of the resin particles is preferably in a range of 1 nm to 200 nm, more preferably in a range of 3 nm to 200 nm, and still more preferably in a range of 5 nm to 50 nm. Further, the average particle diameter of the resin particles is acquired by measuring the volume average particle diameter using a particle size distribution measuring device, for example, "NANOTRAC UPA-EX150" (product name, manufactured by Nikkiso Co., Ltd.) according to a dynamic light scattering method.

A content of the resin particles is preferably 1% by mass to 20% by mass and more preferably 5% by mass to 15% by mass with respect to the total amount of the pretreatment liquid.

-Compound (1)/Resin particles-

In the pretreatment liquid according to the embodiment of the present disclosure, a mass ratio of the content of the compound (1) to the content of the resin particles is preferably 0.05 to 0.50 and more preferably 0.07 to 0.30.

In a case where the above-described ratio is 0.05 or more, the dot is likely to spread.

In a case where the above-described ratio is 0.5 or less, the lamination strength is improved.

(Aggregating agent)

The pretreatment liquid contains an aggregating agent. The aggregating agent contains at least one selected from the group consisting of a polyvalent metal compound and an organic acid. Among these, from the viewpoint of handleability, the aggregating agent is preferably the polyvalent metal compound.

By containing the aggregating agent in the pretreatment liquid, components contained in the ink to be applied later can be aggregated, and the image quality can be improved.

-Polyvalent metal compound-

Examples of the polyvalent metal compound include salts of alkaline earth metals of a group 2 (such as magnesium and calcium) in the periodic table, transition metals of a group 3 (such as lanthanum) in the periodic table, metals of a group 13 (such as aluminum) in the periodic table, and lanthanides (such as neodymium).

As salts of these metals, salts of organic acids, a nitrate, a chloride, and a thiocyanate described below are preferable.

Among these, preferred examples of the polyvalent metal compound include a calcium salt or magnesium salt of an organic acid (such as formic acid, acetic acid, or a benzoic acid), a calcium salt or magnesium salt of nitric acid, calcium chloride, magnesium chloride, and a calcium salt or magnesium salt of thiocyanic acid.

Further, it is preferable that at least a part of the polyvalent metal compound is dissociated into polyvalent metal ions and counterions in the pretreatment liquid.

-Organic acid-

As the organic acid, an organic compound containing an acidic group is exemplified.

Examples of the acidic group include a phosphoric acid group, a phosphonic acid group, a phosphinic acid group, a sulfuric acid group, a sulfonic acid group, a sulfinic acid group, and a carboxy group.

Among these, from the viewpoint of the aggregation rate of the ink, a phosphoric acid group or a carboxy group is preferable, and a carboxy group is more preferable as the acidic group.

Further, it is preferable that at least a part of the acidic group is dissociated in the pretreatment liquid.

Examples of the organic compound containing a carboxy group include (meth)acrylic acid, poly(meth)acrylic acid, acetic acid, formic acid, benzoic acid, glycolic acid, malonic acid, malic acid (preferably DL-malic acid), maleic acid, succinic acid, glutaric acid, pimelic acid, adipic acid, fumaric acid, citric acid, tartaric acid, phthalic acid, 4-methylphthalic acid, lactic acid, pyrrolidone carboxylic acid, pyrone carboxylic acid, pyrrole carboxylic acid, furan carboxylic acid, pyridine carboxylic acid, coumaric acid, thiophene carboxylic acid, and nicotinic acid.

Among these, from the viewpoint of the aggregation rate of the ink, as the organic compound containing a carboxy group, di- or higher valent carboxylic acid (hereinafter, also referred to as polyvalent carboxylic acid) is preferable, and dicarboxylic acid is more preferable.

Specifically, as the polyvalent carboxylic acid, malonic acid, malic acid, maleic acid, succinic acid, glutaric acid, pimelic acid, adipic acid, fumaric acid, tartaric acid, 4-methylphthalic acid, or citric acid is preferable, and malonic acid, malic acid, tartaric acid, succinic acid, glutaric acid, pimelic acid, adipic acid, or citric acid is more preferable.

It is preferable that the organic acid has a low pKa (for example, 1.0 to 5.0). In this manner, the surface charge of particles such as resin particles or the pigment stably dispersed in the ink by a weakly acidic functional group such as a carboxy group can be reduced by bringing the ink into contact with an organic acid having a lower pKa to degrade the dispersion stability.

It is preferable that the organic acid has a low pKa, high solubility in water, and a valence of divalent or higher. In addition, it is more preferable that the organic acid has a high buffer capacity in a pH region with a pKa lower than the pKa of a functional group (for example, a carboxy group) that stably disperses particles in the ink.

The pretreatment liquid may contain only one or two or more kinds of aggregating agents.

The content of the aggregating agent is preferably 0.1% by mass to 40% by mass, more preferably 0.1% by mass to 30% by mass, still more preferably 1% by mass to 20% by mass, and particularly preferably 1% by mass to 10% by mass with respect to the total amount of the pretreatment liquid.

(Water)

The pretreatment liquid contains water. The content of water is not particularly limited and is, for example, in a range of 50% by mass to 90% by mass.

(Other components)

The pretreatment liquid may contain, as necessary, other components in addition to the resin particles, the surfactant, the aggregating agent, and water. Examples of other components that may be contained in the pretreatment liquid include known additives such as an organic solvent, a defoamer, a solid wetting agent, colloidal silica, an inorganic salt, an antifading agent, an emulsification stabilizer, a penetration enhancer, an ultraviolet absorber, a preservative, a fungicide, a pH adjusting agent, a viscosity-adjusting agent, a rust inhibitor, a chelating agent, and a water-soluble polymer compound (for example, water-soluble polymer compounds described in paragraphs 0026 to 0080 of JP2013-001854A).

(Physical properties)

The pH of the pretreatment liquid is preferably 0.1 to 4.5, more preferably 0.2 to 4.0, from the viewpoint of the aggregation rate of the ink. The pH is measured at 25°C using a pH meter, for example, a pH meter (model number "HM-31", manufactured by DKK-TOA CORPORATION).

From the viewpoint of the aggregation rate of the ink, the viscosity of the pretreatment liquid is preferably 0.5 mPa·s to 10 mPa·s and more preferably 1 mPa·s to 5 mPa·s. The viscosity is a value measured at 25°C using a viscometer. The viscosity is measured at 25°C using a viscometer, for example, a TV-22 type viscometer (manufactured by Toki Sangyo Co., Ltd.).

The surface tension of the pretreatment liquid is preferably 60 mN/m or less, more preferably in a range of 20 mN/m to 50 mN/m, and still more preferably in a range of 30 mN/m to 45 mN/m. The surface tension is a value measured at a temperature of 25°C. The surface tension is measured at 25°C by a plate method using a surface tension meter, for example, an automatic surface tension meter (product name, "CBVP-Z", manufactured by Kyowa Interface Science Co., Ltd.).

(Application)

The pretreatment liquid according to the embodiment of the present disclosure is for an ink jet ink. That is, the pretreatment liquid according to the embodiment of the present disclosure is a liquid used to be applied onto a base material in advance before applying the ink jet ink onto the base material.

In particular, the pretreatment liquid according to the embodiment of the present disclosure is preferably used for image recording on an impermeable base material. An image is recorded by applying the pretreatment liquid and the ink in this order onto the impermeable base material.

Since the pretreatment liquid according to the embodiment of the present disclosure contains the compound (1), the adhesiveness to the impermeable base material is excellent, and the dot of the ink spreads, so that an image having excellent image quality can be recorded on the impermeable base material.

- Impermeable base material -

In the present disclosure, the impermeability in the impermeable base material denotes a property that the water absorption rate in 24 hours which is measured in conformity with ASTM D570-98 (2018) is 2.5% or less. Here, the unit "%" of the water absorption rate is on a mass basis. The water absorption rate is preferably 1.0% or less and more preferably 0.5% or less.

Examples of the material of the impermeable base material include glass, a metal (such as aluminum, zinc, or copper), and a resin (such as polyvinyl chloride, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, nylon, or an acrylic resin).

It is preferable that the material of the impermeable base material is a resin. That is, it is preferable that the impermeable base material is a resin base material.

Examples of the material of the impermeable base material are as described above, but polypropylene, polyethylene, polyethylene terephthalate, nylon, an acrylic resin, or polyvinyl chloride is preferable from the viewpoint of versatility.

As the shape of the impermeable base material, a sheet-like (film-like) or a plate-like impermeable base material is preferable. Examples of the impermeable base material having such a shape include a glass plate, a metal plate, a resin sheet (resin film), paper on which plastic is laminated, paper on which a metal is laminated or vapor-deposited, and a plastic sheet (plastic film) on which a metal is laminated or vapor-deposited.

Examples of the impermeable base material made of a resin include a resin sheet (resin film), and more specific examples thereof include a flexible packaging material for packaging food or the like and a panel for guiding the floor of a mass retailer.

Examples of the impermeable base material include a textile (woven fabric) or non-woven fabric formed of impermeable fibers in addition to a sheet-like (film-like) or plate-like impermeable base material.

Further, the thickness of the impermeable base material is preferably in a range of 0.1 $\mu$m to 1,000 $\mu$m, more preferably in a range of 0.1 $\mu$m to 800 $\mu$m, and still more preferably in a range of 1 $\mu$m to 500 $\mu$m.

The impermeable base material may be subjected to a hydrophilization treatment. Examples of the hydrophilization treatment include a corona treatment, a plasma treatment, a heat treatment, an abrasion treatment, a light irradiation treatment (such as a UV treatment), and a flame treatment, but the hydrophilization treatment is not limited thereto. The corona treatment can be performed using, for example, Corona Master (product name, "PS-10S", manufactured by Shinko Electric & Instrumentation Co., Ltd.). The conditions for the corona treatment may be appropriately selected according to the kind of the impermeable base material and the like.

The impermeable base material may be an impermeable base material having transparency.

Here, the expression of "having transparency" denotes that the transmittance of visible light having a wavelength of 400 nm to 700 nm is 80% or greater (preferably 90% or greater).

In a case where the impermeable base material is an impermeable base material having transparency, the image is easily visually recognized through the impermeable base material from the image non-recorded surface side of the impermeable base material.

For example, with the impermeable base material having transparency, in a case where a pretreatment liquid, a colored ink, and a white ink in this order are applied onto the impermeable base material to record an image, a colored image (for example, a pattern image such as a character and a figure) with a white image (for example, a solid image) as a background is easily visually recognized through the impermeable base material from the image non-recorded surface side of the impermeable base material.

[Surface-treated base material]

It is preferable that the surface-treated base material according to the embodiment of the present disclosure includes an impermeable base material and a pretreatment layer disposed on the impermeable base material and containing a solid content of the pretreatment liquid.

Details of the impermeable base material are as described above.

The solid content of the pretreatment liquid means a component other than volatile components (for example, water and an organic solvent) contained in the pretreatment liquid. Specific examples of the solid content of the pretreatment liquid include the resin particles, the aggregating agent, and the surfactant (including the compound (1)).

The surface-treated base material according to the embodiment of the present disclosure can be obtained, for example, by applying the pretreatment liquid onto the impermeable base material and then drying the pretreatment liquid by a known method to remove the volatile components contained in the pretreatment liquid.

Since the pretreatment layer in the surface-treated base material according to the embodiment of the present disclosure contains the compound (1), the dot is likely to spread by the application of the ink, and an image having excellent image quality can be recorded on the surface-treated base material. In addition, since the surface-treated base material according to the embodiment of the present disclosure contains the compound (1), the adhesiveness between the impermeable base material and the pretreatment layer is excellent. Therefore, in a case where an image is recorded on the pretreatment layer and then the base material for lamination is laminated, the obtained laminate has excellent lamination strength.

[Ink set]

The ink set according to the embodiment of the present disclosure includes the pretreatment liquid and an ink jet ink containing water and a pigment (hereinafter, also referred to as an "ink").

The ink set according to the embodiment of the present disclosure may be only one kind or two or more kinds.

From the viewpoint of designability, it is preferable that the ink set include, as the inks, a white ink and a colored ink other than the white ink. Examples of the colored ink other than the white ink include a magenta ink, a cyan ink, a yellow ink, and a black ink.

Hereinafter, a preferred aspect of the ink in the ink set will be described.

(Pigment)

The ink included in the ink set according to the embodiment of the present disclosure contains a pigment. The ink may contain one or two or more kinds of pigments.

A commercially available organic pigment or inorganic pigment may be used as the pigment. Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In addition, the pigment may be a water-insoluble pigment which can be dispersed in water by a dispersing agent, or may be a self-dispersing pigment. The self-dispersing pigment is a pigment that can be dispersed in water without using a dispersing agent. The self-dispersing pigment is, for example, a compound in which at least one selected from the group consisting of hydrophilic groups such as a carbonyl group, a hydroxyl group, a carboxyl group, a sulfo group, and a phosphoric acid group and salts thereof is chemically bonded to a surface of a pigment directly or via another group.

Examples of the organic pigment include an azo pigment, a polycyclic pigment, a chelate dye, a nitro pigment, a nitroso pigment, and aniline black. Examples of the azo pigment include azo lake, an insoluble azo pigment, a condensed azo pigment, and a chelated azo pigment. Examples of the polycyclic pigment include a phthalocyanine pigment, a perylene pigment, a perinone pigment, an anthraquinone pigment, a quinacridone pigment, a dioxazine pigment, an indigo pigment, a thioindigo pigment, an isoindolinone pigment, and a quinophthalone pigment. Examples of the chelate dye include a basic dye-type chelate and an acid dye-type chelate.

Examples of the inorganic pigment include titanium oxide, iron oxide, calcium carbonate, barium sulfate, aluminum hydroxide, barium yellow, cadmium red, chrome yellow, and carbon black.

From the viewpoints of the image density and the jettability of the ink, the content of the pigment in the ink is preferably in a range of 1% by mass to 20% by mass, more preferably in a range of 1% by mass to 15% by mass, and still more preferably in a range of 1% by mass to 10% by mass with respect to the total amount of the ink.

(Water)

The ink in the ink set according to the embodiment of the present disclosure contains water. The content of water is not particularly limited and is, for example, 40% by mass to 70% by mass.

(Additive)

The ink may contain, as necessary, additives such as an organic solvent, resin particles, a surfactant, a co-sensitizer, an ultraviolet absorber, an antioxidant, an antifading agent, a conductive salt, and a basic compound.

(Physical properties)

From the viewpoint of improving the jetting stability, the pH of the ink is preferably in a range of 7 to 10 and more preferably in a range of 7.5 to 9.5. The pH is measured at 25°C using a pH meter, for example, a pH meter (model number "HM-31", manufactured by DKK-TOA CORPORATION).

The viscosity of the ink is preferably in a range of 0.5 mPa·s to 30 mPa·s, more preferably in a range of 2 mPa·s to 20 mPa·s, still more preferably in a range of 2 mPa·s to 15 mPa·s, and even still more preferably in a range of 3 mPa·s to 10 mPa·s. The viscosity is measured at 25°C using a viscometer, for example, a TV-22 type viscometer (manufactured by Toki Sangyo Co., Ltd.).

The surface tension of the ink is preferably 60 mN/m or less, more preferably in a range of 20 mN/m to 50 mN/m, and still more preferably in a range of 30 mN/m to 45 mN/m. The surface tension is measured at 25°C by a plate method using a surface tension meter, for example, an automatic surface tension meter (product name, "CBVP-Z", manufactured by Kyowa Interface Science Co., Ltd.).

[Image recording method]

The image recording method according to the embodiment of the present disclosure includes a step of applying the pretreatment liquid onto the impermeable base material (hereinafter, referred to as a "pretreatment liquid applying step") and a step of applying the ink containing water and a pigment onto the impermeable base material to which the pretreatment liquid has been applied, using an ink jet recording method, to record an image (hereinafter, referred to as an "image recording step").

(Pretreatment liquid applying step)

In the pretreatment liquid applying step, the pretreatment liquid is applied onto the impermeable base material.

Details of the impermeable base material are as described above.

A method of applying the pretreatment liquid is not particularly limited, and examples thereof include known methods such as a coating method, a dipping method, and an ink jet recording method.

Examples of the coating method include known coating methods using a bar coater, an extrusion die coater, an air doctor coater, a blade coater, a rod coater, a knife coater, a squeeze coater, a reverse roll coater, or the like.

The ejection method of the ink by the ink jet recording method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming bubbles, and using generated pressure, and the like may be used.

In a case where the pretreatment liquid is applied by the ink jet recording method, the pretreatment liquid may be filled with an ink tank of the ink jet recording device instead of the ink.

As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the pretreatment liquid onto the impermeable base material by an ink jet recording method is performed by jetting the pretreatment liquid from a nozzle of an ink jet head.

The way of using the ink jet head also includes a shuttle method of performing recording while a short serial head is allowed to scan in the width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that scans a short head in the shuttle system is not necessary. In addition, in the line method, since movement of a carriage and complicated scanning control between the short head and the recorded medium are not necessary as compared with the shuttle system, only the recorded medium moves. Therefore, according to the line method, an increase in the recording speed of an image is achieved as compared with the shuttle method.

It is preferable that the application of the pretreatment liquid is performed using an ink jet head having a resolution of 300 dpi or greater (more preferably 600 dpi or greater and still more preferably 800 dpi or greater). Herein, dpi is an abbreviation for dot per inch, and 1 inch is 2.54 cm.

From the viewpoint of obtaining a high-definition image, the liquid droplet amount of the pretreatment liquid to be jetted from a nozzle of an ink jet head is preferably in a range of 1 pico liter (pL) to 10 pL and more preferably in a range of 1.5 pL to 6 pL.

(Image recording step)

In the image recording step, the ink is applied onto the impermeable base material to which the pretreatment liquid has been applied, using an ink jet recording method, to record an image. The details of the ink jet recording method are the same as the details of the ink jet recording method in the method of applying the pretreatment liquid.

(Other steps)

The image recording method according to the embodiment of the present disclosure may include other steps in addition to the pretreatment liquid applying step and the image recording step.

After the application of the pretreatment liquid, the pretreatment liquid applied onto the impermeable base material may be heated and dried. Examples of the means for heating and drying the pretreatment liquid include known heating means such as a heater, known air blowing means such as a dryer, and means for combining these.

Examples of the method of heating and drying the pretreatment liquid include a method of applying heat using a heater or the like from a side of the impermeable base material opposite to the surface onto which the pretreatment liquid has been applied; a method of applying warm air or hot air to the surface of the impermeable base material onto which the pretreatment liquid has been applied; a method of applying heat using an infrared heater from the surface of the impermeable base material onto which the pretreatment liquid has been applied or from a side of the impermeable base material opposite to the surface onto which the pretreatment liquid has been applied; and a method of combining a plurality of these methods.

The heating temperature of heating and drying the pretreatment liquid is preferably 35°C or higher and more preferably 40°C or higher. The upper limit of the heating temperature is not particularly limited, but is preferably 100°C, more preferably 90°C, and still more preferably 70°C.

The time of heating and drying the pretreatment liquid is not particularly limited, but is preferably in a range of 0.5 seconds to 60 seconds, more preferably in a range of 0.5 seconds to 20 seconds, and still more preferably in a range of 0.5 seconds to 10 seconds.

[Manufacturing method of laminate]

A manufacturing method of a laminate according to the embodiment of the present disclosure includes a step of obtaining a printed material that includes the impermeable base material and an image disposed on the impermeable base material by the image recording method according to the embodiment of the present disclosure, and a step of laminating a base material for lamination on a side of the printed material on which the image is disposed, to obtain a laminate.

With the image recording method according to the embodiment of the present disclosure, in a case where a base material for lamination is laminated on the image, a printed material including the impermeable base material and the image recorded on the impermeable base material can be manufactured, in which the lamination strength is excellent.

Therefore, the image recording method according to the embodiment of the present disclosure is suitably used for manufacturing a laminate including the above-described printed material and a base material for lamination which is laminated on a side of the printed material where the image is recorded.

With the manufacturing method of a laminate according to the embodiment of the present disclosure, a laminate having excellent lamination strength between the printed material and the base material for lamination can be manufactured.

The step of obtaining a printed material can refer to the image recording method according to the embodiment of the present disclosure described above.

The step of obtaining a laminate is a step of laminating the base material for lamination on a side of the printed material on which the image is disposed, to obtain a laminate. The lamination can be performed by a method of superimposing the base material for lamination on the side of the printed material on which the image is disposed via another layer (for example, an adhesive layer) and attaching the base material thereto, a method of attaching the base material for lamination to the side of the printed material on which the image is disposed via a laminator in a state where the base material is superimposed on the side thereof, or the like. In the latter case, a commercially available laminator can be used.

The lamination temperature in a case of carrying out the lamination is not particularly limited. For example, in a case where the printed material and the base material for lamination are attached to each other via another layer (for example, an adhesive layer), the temperature may be 20°C or higher. In addition, in a case where a laminator is used, the temperature of a laminating roll may be set to be in a range of 20°C to 80°C. The pressure-bonding force between a pair of laminating rolls may be appropriately selected as necessary.

It is preferable that the base material for lamination is a resin base material. The resin base material is not particularly limited, and examples thereof include a base material consisting of a thermoplastic resin.

A base material obtained by molding a thermoplastic resin in a sheet shape is exemplified as the resin base material. It is preferable that the resin base material contains polypropylene, polyethylene terephthalate, nylon, polyethylene, or polyimide.

The shape of the resin base material is not particularly limited, but it is preferable that the resin base material has a sheet shape. The thickness of the resin base material is preferably in a range of 10 $\mu$m to 200 $\mu$m and more preferably in a range of 10 $\mu$m to 100 $\mu$m.

In the step of obtaining a laminate, the base material for lamination may be laminated directly on a side of the printed material on which the image is disposed or via another layer (for example, an adhesive layer).

In a case where the base material for lamination is laminated directly on a side of the printed material on which the image is disposed, the lamination can be performed by a known method such as thermocompression bonding or thermal fusion welding.

In addition, in a case where the base material for lamination is laminated on a side of the printed material on which the image is disposed via an adhesive layer, the lamination can be performed by, for example, a method of coating the side of the printed material on which the image is disposed with an adhesive, placing the base material for lamination, and bonding the printed material to the base material for lamination.

In addition, in the case where the base material for lamination is laminated on a side of the printed material on which the image is disposed via an adhesive layer, the lamination can also be performed by an extrusion lamination method (that is, sandwich lamination) or the like.

It is preferable that the adhesive layer contains an isocyanate compound. In a case where the adhesive layer contains an isocyanate compound, since the adhesiveness between the adhesive layer and the image is further improved, the lamination strength can be further improved.

[Printed material]

The printed material according to the embodiment of the present disclosure includes an impermeable base material and an image disposed on the impermeable base material, in which the image includes a pretreatment layer containing a solid content of the pretreatment liquid and an ink layer disposed on the pretreatment layer and containing a pigment.

The laminate obtained by laminating the printed material according to the embodiment of the present disclosure with a base material for lamination has excellent lamination strength.

Preferred aspects of each component in the printed material are as described above.

[Laminate]

The laminate according to the embodiment of the present disclosure includes the printed material and a base material for lamination that laminates a side of the printed material on which the image is disposed.

The laminate according to the embodiment of the present disclosure has excellent lamination strength.

The base material for lamination in the laminate may be laminated directly on a side of the printed material on which the image is disposed or may be laminated via another layer (for example, an adhesive layer).

It is preferable that the laminate according to the embodiment of the present disclosure is manufactured by the manufacturing method of a laminate of the present disclosure.

The preferred embodiments of the base material for lamination and the adhesive layer are respectively the same as the preferred embodiments described in the section of the manufacturing method of a laminate.

Examples

Hereinafter, the present disclosure will be described in more detail based on examples, but the present disclosure is not limited to the following examples unless the gist thereof is overstepped.

In Examples 1 to 18, the pretreatment liquid was prepared by mixing the resin particles, the aggregating agent, and the surfactant shown in Table 1 with an organic solvent, a defoamer, and water.

· Resin particles: content shown in Table 1
· Aggregating agent: content shown in Table 1
· Surfactant: content shown in Table 1
· Organic solvent: 1,2-propanediol (manufactured by FUJIFILM Wako Pure Chemical Corporation): 1% by mass
· Defoamer (product name "TSA-739", manufactured by Momentive Performance Materials Japan LLC): 0.01% by mass in terms of solid content amount of defoamer
· Water: remaining amount set such that total amount of pretreatment liquid reached 100% by mass

In Examples 21 to 38, the pretreatment liquid was prepared by mixing the following resin particles with the aggregating agent, the surfactant, and the organic solvent shown in Table 2, and a defoamer and water.

· Resin particles (polyether urethane resin particles 2: product name "HYDRAN WLI-602", manufactured by DIC Corporation): 10% by mass
· Aggregating agent: content shown in Table 2
· Surfactant: content shown in Table 2
· Organic solvent: content shown in Table 2
· Defoamer (product name "TSA-739", manufactured by Momentive Performance Materials Japan LLC): 0.01% by mass in terms of solid content amount of defoamer
· Water: remaining amount set such that total amount of pretreatment liquid reached 100% by mass

Details of each component included in the pretreatment liquid are as follows.

(Resin particles)

· Polyether urethane resin particles: product name "HYDRAN WLI-630AR", manufactured by DIC Corporation
· Acrylic resin particles: product name "SANACRYL FB-810 ECO", manufactured by Murayama Chemical Research Institute Co., Ltd.
· Polyester urethane resin particles: product name "SUPERFLEX 500M", manufactured by DKS Co., Ltd.
· Polycarbonate urethane resin particles: product name "HYDRAN WLI-620AR", manufactured by DIC Corporation
· Urethane resin A (urethane resin having a unit derived from a polycyclic aliphatic diol): synthesized by the method shown below with reference to Example 1 of JP2022-146167A
· Polyether urethane resin particles 2: product name "HYDRAN WLI-602", manufactured by DIC Corporation

-Preparation of aqueous dispersion liquid of urethane resin A-

35.9 parts by mass of tricyclo[5.2.1.0(2,6)]decane dimethanol as a polycyclic aliphatic diol, 4.5 parts by mass of 2,2-dimethylolpropionic acid as a polyol component having a carboxy group, 37.4 parts by mass of 4,4-diphenylmethane diisocyanate as an aromatic polyisocyanate component, 22.1 parts by mass of isophorone diisocyanate as an aliphatic isocyanate, and 54 parts by mass of methyl ethyl ketone as a reaction organic solvent were charged into a simple pressurized reactor including a stirrer and a heating device, and the mixture was stirred at 70°C for 12 hours to perform a urethanization reaction, thereby producing a methyl ethyl ketone solution of a urethane prepolymer (P1) having an isocyanate group.

Next, 2.9 parts by mass of triethylamine as a neutralizing agent was added to the obtained methyl ethyl ketone solution of the urethane prepolymer (P1) and the mixture was made uniform, and then 176 parts by mass of ion exchange water as an aqueous medium was added thereto while stirring at 200 rpm to disperse the polyurethane prepolymer in water. The obtained dispersion liquid was heated to 50°C and stirred for 4 hours to perform a chain extension reaction by an amino group formed by a reaction between water and an isocyanate group, and then heated to 60°C under reduced pressure to distill off methyl ethyl ketone. Thereafter, water was added thereto to adjust a solid content concentration of 30% by weight, thereby obtaining a water dispersion liquid of the urethane resin A. The urethane resin A was present as resin particles in the water dispersion liquid.

(Aggregating agent)

· Ca acetate monohydrate: calcium acetate monohydrate (manufactured by FUJIFILM Wako Pure Chemical Corporation)
· Mg acetate tetrahydrate: magnesium acetate tetrahydrate (manufactured by FUJIFILM Wako Pure Chemical Corporation)
· Ca lactate pentahydrate: calcium lactate pentahydrate (manufactured by FUJIFILM Wako Pure Chemical Corporation)
· Mg lactate trihydrate: magnesium lactate trihydrate (manufactured by FUJIFILM Wako Pure Chemical Corporation)
· Ca formate: calcium formate (manufactured by FUJIFILM Wako Pure Chemical Corporation)
· Mg formate dihydrate: magnesium formate dihydrate (manufactured by Sigma-Aldrich Co., LLC)

· Malonic acid (manufactured by FUJIFILM Wako Pure Chemical Corporation)

(Surfactant)

-Compound (1)-

· PE-62: product name "NEWPOL PE-62", manufactured by Sanyo Chemical Industries, Ltd., [POE(10)POP(30)]
· PE-74: product name "NEWPOL PE-74", manufactured by Sanyo Chemical Industries, Ltd., [POE(30)POP(35)]
· PE-75: product name "NEWPOL PE-75", manufactured by Sanyo Chemical Industries, Ltd., [POE(48)POP(35)]
· PE-78: product name "NEWPOL PE-78", manufactured by Sanyo Chemical Industries, Ltd., [POE(150)POP(35)]
· L-31: product name "ADEKA PLURONIC L-31", manufactured by ADEKA Corporation, [POE(3)POP(17)]
· L-64: product name "ADEKA PLURONIC L-64", manufactured by ADEKA Corporation, [POE(25)POP(30)]
· L-44: product name "ADEKA PLURONIC L-44", manufactured by ADEKA Corporation, [POE(20)POP(20)]

The number in parentheses after POE means a total value of x + z in Formula (1). In addition, the number in parentheses after POP means a value of y in Formula (1).

-Surfactant does not correspond to compound (1)-

· EMULGEN 103: product name "EMULGEN 103", manufactured by Kao Corporation, polyoxyethylene lauryl ether
· E1010: product name "OLFINE E1010", manufactured by Nissin Chemical Co., Ltd., ethylene oxide adduct of acetylene glycol
· 25R-2: product name "ADEKA PLURONIC 25R-2", manufactured by ADEKA Corporation, $H(OCH(CH_3)CH_2)_a$ $(OCH_2CH_2)_b(OCH(CH_3)CH_2)_c$-OH

(Organic solvent)

PD: 1,2-propanediol (manufactured by FUJIFILM Wako Pure Chemical Corporation)
2P: 2-propanol (manufactured by FUJIFILM Wako Pure Chemical Corporation)

<Preparation of ink>

In preparation of an ink, first, a pigment dispersion liquid was prepared.

The following pigment dispersion liquids were prepared as a cyan pigment dispersion liquid, a magenta pigment dispersion liquid, a yellow pigment dispersion liquid, and a black pigment dispersion liquid. Each of these pigment dispersion liquids is a dispersion liquid in which a pigment of each color is dispersed by a crosslinked polymer.

· Cyan pigment dispersion liquid: product name "APD4000 Cyan (pigment concentration of 20.0% by mass)", manufactured by FUJIFILM Imaging Colorants Ltd.
· Magenta pigment dispersion liquid 1: product name, "APD4000 Magenta (pigment concentration of 18.5% by mass)", manufactured by FUJIFILM Imaging Colorants Ltd.
· Magenta pigment dispersion liquid 2: product name "APD1000 RED (pigment concentration of 14.3% by mass)", manufactured by FUJIFILM Imaging Colorants Ltd.
· Yellow pigment dispersion liquid: product name "APD4000 Yellow (pigment concentration of 19.9% by mass)", manufactured by FUJIFILM Imaging Colorants Ltd.)
· Black pigment dispersion liquid: product name "APD4000 Black (pigment concentration of 15.0% by mass)", manufactured by FUJIFILM Imaging Colorants Ltd.

(Preparation of cyan ink 1)

The components shown below were mixed to prepare cyan ink 1.

· APD4000 Cyan pigment dispersion liquid (C. I. Pigment Blue 15:3): 3.0% by mass (as pigment solid content)
· Propylene glycol (PG) (water-soluble organic solvent): 25% by mass
· Propylene glycol monomethyl ether (PM) (water-soluble organic solvent): 1% by mass
· NeoCryl A1091 (styrene acrylic polymer resin fine particle dispersion): 5.0% by mass as solid content
· OLEFINE E1010 (manufactured by Nissin Chemical Co., Ltd., acetylene glycol surfactant): 0.5% by mass
· Silicone surfactant (Byk3450): 0.5% by mass
· Colloidal silica ("SNOWTEX XS" manufactured by Nissan Chemical Corporation): 0.05% by mass as solid content
· Water: remaining amount set such that total amount of composition was 100% by mass

(Preparation of cyan ink 2)

A cyan ink 2 was prepared by the same method as in the cyan ink 1, except that the propylene glycol monomethyl ether contained in the cyan ink 1 was changed to diethylene glycol monobutyl ether, and the resin particles were changed to the following resin particles.

· EBAFANOL HA-55 (polycarbonate urethane polymer resin fine particle dispersion, manufactured by NIKKA CHEMICALS CO., LTD.)

(Preparation of cyan ink 3)

A cyan ink 3 was prepared by the same method as in the cyan ink 1, except that the content of OLFINE E1010 contained in the cyan ink 2 was changed to 2.0% by mass, and the resin particles were changed to the following resin particles.

· EBAFANOL HA-55 (polycarbonate urethane polymer resin fine particle dispersion, manufactured by NIKKA CHEMICALS CO., LTD.): 4.0% by mass as solid content
· NeoCryl A1091 (styrene acrylic polymer resin fine particle dispersion): 1.0% by mass as solid content

(Preparation of magenta ink 1)

A magenta ink 1 was prepared by the same method as in the cyan ink 1, except that the cyan pigment dispersion liquid contained in the cyan ink 1 was changed to the magenta pigment dispersion liquid 1, the propylene glycol monomethyl ether was changed to diethylene glycol monobutyl ether, and the resin particles were changed to the following resin particles.

· EBAFANOL HA-55 (polycarbonate urethane polymer resin fine particle dispersion, manufactured by NIKKA CHEMICALS CO., LTD.)

(Preparation of magenta ink 2)

A magenta ink 2 was prepared by the same method as in the magenta ink 1, except that the content of the magenta pigment dispersion liquid 1 contained in the magenta ink 1 of 3.0% by mass (as pigment solid content) was changed to 4.0% by mass of the magenta pigment dispersion liquid 1 and 1.5% by mass of the magenta pigment dispersion liquid 2, and the content of OLFINE E1010 was changed to 2.0% by mass.

(Preparation of magenta ink 3)

A magenta ink 3 was prepared by the same method as in the magenta ink 2, except that the resin particles contained in the magenta ink 2 were changed to the following resin particles.

· Styrene acrylic polymer resin fine particle dispersion (product name "JONCRYL PDX-7615", manufactured by BASF SE)

(Preparation of yellow ink 1)

A yellow ink 1 was prepared by the same method as in the cyan ink 1, except that the cyan pigment dispersion liquid contained in the cyan ink 1 was changed to a yellow pigment dispersion liquid, the propylene glycol monomethyl ether was changed to diethylene glycol monobutyl ether, and the resin particles were changed to the following resin particles.

· EBAFANOL HA-55 (polycarbonate urethane polymer resin fine particle dispersion, manufactured by NIKKA CHEMICALS CO., LTD.)

(Preparation of yellow ink 2)

A yellow ink 2 was prepared by the same method as in the yellow ink 1, except that the content of OLFINE E1010 contained in the yellow ink 1 was changed to 2.0% by mass.

(Preparation of black ink 1)

A black ink 1 was prepared by the same method as in the cyan ink 1, except that the cyan pigment dispersion liquid contained in the cyan ink 1 was changed to a black pigment dispersion liquid, the propylene glycol monomethyl ether was changed to diethylene glycol monobutyl ether, and the resin particles were changed to the following resin particles.

· EBAFANOL HA-55 (polycarbonate urethane polymer resin fine particle dispersion, manufactured by NIKKA CHEMICALS CO., LTD.)

(Preparation of black ink 2)

A black ink 2 was prepared by the same method as in the black ink 1, except that the content of the black pigment dispersion liquid contained in the black ink 1 was changed to 4.0% by mass of the black pigment dispersion liquid, 1.0% by mass of the cyan pigment dispersion liquid, and 1.0% by mass of the magenta pigment dispersion liquid 1, and the content of OLFINE E1010 was changed to 2.0% by mass.

<Preparation of white ink 1>

In preparation of the white ink, a white pigment dispersion liquid was prepared in advance.

(Preparation of block polymer)

A reactor including a 1 L separable flask equipped with a stirrer, a reflux condenser, a thermometer, and a nitrogen introduction pipe was added to 266 parts by mass of diethylene glycol dimethyl ether, 6.2 parts by mass of 2-iodo-2-cyanopropane, 120 parts by mass of methyl methacrylate (MMA),
**[0211]** 28.8 parts by mass of acrylic acid (AA), 67.2 parts by mass of cyclohexyl methacrylate (CHMA), 7.9 parts by mass of azobisdimethylisovaleronitrile, and 0.7 parts by mass of 2-t-butyl-4,6-dimethylphenol, and the mixture was stirred while flowing nitrogen.
Next, the temperature of the mixture in the reactor was increased to 70°C, and the mixture was polymerized for 3 hours, thereby obtaining a polymerization solution A containing an MMA/AA/CHMA copolymer.
After 3 hours, as a result of sampling a part of the polymerization solution A and measuring the solid content, the solid content was 42.0% by mass, and thus it was confirmed that most of the monomers were polymerized.
In addition, in a case where the weight-average molecular weight (Mw) of the MMA/AA/CHMA copolymer was measured by GPC, the weight-average molecular weight (Mw) was 7,500.
The acid value of the MMA/AA/CHMA copolymer was 101.0 mgKOH/g.
Next, a mixture of 35.2 parts by mass of benzyl methacrylate (BzMA) and 0.3 parts by mass of 2,2'-azobis(2,4-dimethylvaleronitrile) (product name "V-65", manufactured by FUJIFILM Wako Pure Chemical Corporation) was added to the polymerization solution A, and the solution was polymerized at 70°C for 3 hours, thereby obtaining a polymerization solution B containing a block polymer 1.
Here, the block polymer 1 is a block polymer containing an A block which is an MMA/AA/CHMA copolymer and a B block which is a BzMA homopolymer.
As a result of measurement of the solid content in the obtained polymerization solution B, the solid content thereof was 43.2% by mass and it was confirmed that most of the monomers were polymerized.
In addition, the Mw of the block polymer 1 was 8,500, and the acid value thereof was 89.3 mgKOH/g. The block polymer 1 was defined as a pigment dispersing agent.

(Preparation of white pigment dispersion liquid)

136.4 parts by mass of the polymerization solution B containing the block polymer 1, 163.6 parts by mass of butyl carbitol, and 450 parts by mass of C. I. Pigment White 6 (trade name, "JR-405", manufactured by Tayca Corporation, titanium dioxide particles) as a white pigment were blended with each other and stirred with a disper. Next, the white pigment was sufficiently dispersed using a horizontal media disperser, thereby obtaining an oil pigment dispersion liquid. The average particle diameter of the white pigment dispersed in the oil pigment dispersion liquid was 290 nm. The viscosity (25°C) of the oil pigment dispersion liquid was 86.3 mPa·s.

Next, a mixed solution consisting of 4.0 parts by mass of potassium hydroxide and 341 parts by mass of water was gradually added to 700 parts by mass of the oil pigment dispersion liquid while being stirred using a disper, and the solution was neutralized. Thereafter, the white pigment was sufficiently dispersed using a horizontal media disperser, thereby obtaining a pigment dispersion liquid.

Next, ultrafiltration was performed by allowing ion exchange water to flow through the obtained pigment dispersion liquid at a flow rate of 600 mL per minute using an ultrafiltration device (cross-flow type ultrafilter (UF), manufactured by Sartorius AG). The liquid temperature was maintained at 25°C, and the ultrafiltration was performed ten times by setting one time the volume of the charged liquid to once. Ion exchange water was added thereto, thereby obtaining a white pigment dispersion liquid in which the pigment concentration was 45% by mass and the concentration of the pigment dispersing agent was 3.7% by mass.

Each of the components shown below was mixed to prepare a white ink 1 having a pigment concentration of 14% by mass.

· Aqueous white pigment dispersion liquid: amount set such that the pigment concentration reached 14% by mass
· Propylene glycol: 25% by mass
· Propylene glycol monomethyl ether: 1% by mass
· Propylene glycol monopropyl ether: 1% by mass
· NeoCryl A1091: 3% by mass
· OLFINE E1010: 0.5% by mass
· Byk3450: 0.5% by mass
· Colloidal silica: 0.05% by mass as solid content
· Water: remaining amount set such that total amount of white ink was 100% by mass

(Preparation of white ink 2)

A white ink 2 was prepared by the same method as in the white ink 1, except that the propylene glycol monomethyl ether contained in the white ink 1 was changed to diethylene glycol monobutyl ether, and the resin particles were changed to the following resin particles.

· EBAFANOL HA-55 (polycarbonate urethane polymer resin fine particle dispersion, manufactured by NIKKA CHEMICALS CO., LTD.)

(Preparation of white ink 3)

A white ink 3 was prepared by the same method as in the white ink 1, except that the propylene glycol monomethyl ether contained in the white ink 1 was changed to diethylene glycol monobutyl ether, and the resin particles were changed to the following resin particles.

· Styrene acrylic polymer resin fine particle dispersion (product name "JONCRYL PDX-7615", manufactured by BASF SE)

[Image recording]

As an impermeable base material (hereinafter, also simply referred to as a "base material"), a biaxially stretched polypropylene film (OPP) (product name "FOR", manufactured by Futamura Chemical Co., Ltd., thickness: 20 μm, width: 100 mm, length: 240 mm) was prepared.

An image recording device including a transport mechanism for transporting the base material, a wire bar coater for applying the pretreatment liquid, a first ink jet head for applying the cyan ink, and a second ink jet head for applying the white ink in this order from the upstream side of the base material in the transport direction was prepared.

As both the first ink jet head and the second ink jet head, 1200 dpi/20 inch-width piezo full line heads were used.

Here, dpi is an abbreviation for dot per inch.

Both the first ink jet head and the second ink jet head were line heads in which the heads were arranged in a direction (that is, the width direction of the base material) orthogonal to the transport direction of the base material.

As each of the above-described ink jet heads, Samba (registered trademark) G3L (manufactured by FUJIFILM DIMATIX) was used.

The base material, the pretreatment liquid, the cyan ink, and the white ink were set in the image recording device.

The pretreatment liquid, the cyan ink 1, and the white ink 1 were applied onto the base material in this order to obtain a printed material. The specific method is as follows.

The pretreatment liquid was applied onto the base material using a wire bar coater while the base material was moved at a constant speed of 50 m/min. The mass of the pretreatment liquid applied was set to 2.0 g/m$^2$.

After 1 second from the time point at which the application of the pretreatment liquid was completed, the pretreatment liquid was dried by blowing hot air at 60°C at a wind speed of 22 m/sec for 3 seconds using a dryer to form a pretreatment liquid layer on the base material.

The cyan ink was applied onto the surface of the pretreatment liquid layer in the form of a solid image while moving the base material on which the pretreatment liquid layer was formed at a constant speed of 50 m/min to form a cyan layer. The white ink was applied to the surface of the cyan layer in the form of a solid image to form a white ink layer. The cyan ink and the white ink were jetted under the conditions of a resolution of 1200 dpi × 1200 dpi and a jet frequency of 39.37 kHz.

A laminate was prepared using the obtained printed material, and the lamination strength was evaluated. In addition, the dot diameter of the cyan ink was evaluated. Further, the storage stability of the pretreatment liquid was evaluated. The evaluation method is as follows.

[Evaluation]

<Lamination strength>

A region having a length of 200 mm and a width of 100 mm (hereinafter, also referred to as a lamination strength evaluation region) in which the solid image was provided on the entire surface was cut out from the printed material and used as a lamination strength evaluation sample.

The solid image in the lamination strength evaluation sample was coated with an adhesive for dry lamination (main agent TM-320 (isocyanate compound)/curing agent CAT-13B (alcohol compound), manufactured by Toyo-Morton, Ltd.) using a bar coater and dried at 70°C for 10 seconds. Further, an unstretched polypropylene film (CPP) film (trade name: PYLEN P1128, manufactured by Toyobo Co., Ltd., thickness of 25 μm) was laminated as the base material for lamination. In this state, the base material for lamination and the lamination strength evaluation sample were attached to each other, thereby obtaining a laminate. The obtained laminate was aged at 40°C for 48 hours.

A sample piece having a length of 100 mm and a width of 15 mm was cut out from the aged laminate.

Next, the base material for lamination and the lamination strength evaluation sample in a region from the one end in the longitudinal direction to a length of 30 mm in the sample piece were peeled by hand. The remaining region with a length of 70 mm was allowed to remain in a state where the base material for lamination and the lamination strength evaluation sample were attached to each other.

Next, a tensile test of stretching the peeled portion of the base material for lamination and the peeled portion of the lamination strength evaluation sample in opposite directions in the sample piece was performed. The stretching direction was a direction perpendicular to the above-described remaining region with a length of 70 mm (the remaining region in a state where the base material for lamination and the lamination strength evaluation sample were attached to each other).

The peel strength for peeling the base material for lamination and the sample for evaluating the lamination strength in the remaining region with a length of 70 mm was determined by performing the tensile test, and the obtained peel strength was set as the lamination strength.

Further, the tensile test was performed at 25°C using a tensile tester (product name, "TENSILON RTM-25", manufactured by Orientec Co., Ltd.).

The evaluation standards are as follows.

AA: The lamination strength was 2.0 N/15 mm or greater.
A: The lamination strength was 1.5 N/15 mm or greater and less than 2.0 N/15 mm.
B: The lamination strength was 1.0 N/15 mm or greater and less than 1.5 N/15 mm.
C: The lamination strength was 0.5 N/15 mm or greater and less than 1.0 N/15 mm.
D: The lamination strength was less than 0.5 N/15 mm.

<Dot diameter>

An image of 2 cm square at a Duty of 10% with a dot shape that could be checked was recorded by the method described in the column of the image recording, and the image portion of Duty 10% was observed with magnification. The dot diameter of the obtained image was measured at 30 points, and an average value was calculated. The average value was defined as the dot diameter. The dot diameter was measured using a dot analyzer DA-6000 (manufactured by Oji Scientific Instruments Co., Ltd.).

The evaluation standards are as follows.

A: The dot diameter was 35 $\mu$m or more.
B: The dot diameter was 33 $\mu$m or more and less than 35 $\mu$m.
C: The dot diameter was 30 $\mu$m or more and less than 33 $\mu$m.
D: The dot diameter was less than 30 $\mu$m.

<Storage stability>

The pretreatment liquid was placed in a 9 mL vial bottle (product name: Labance Screw Tube Bottle, manufactured by AS ONE Corporation) and sealed. The vial bottle was stored in a constant-temperature tank at 60°C for 1 week. The viscosity before and after the storage was measured, and the viscosity before the storage was defined as A, and the viscosity after the storage was defined as B. A rate of change in viscosity was calculated based on the following expression.

The viscosity was measured at 25°C using a TV-22 type viscometer manufactured by Toki Sangyo Co., Ltd.

$$\text{Rate of change in viscosity (\%)} = [(B - A)/A] \times 100$$

The evaluation standards are as follows.

A: The rate of change in viscosity was within $\pm$5%.
B: The rate of change in viscosity was more than $\pm$5% and within $\pm$10%.
C: The rate of change in viscosity was more than $\pm$10%. Alternatively, the pretreatment liquid was gelled and could not be evaluated.

The evaluation results are shown in Table 1.

In Table 1, the numerical value described in the column of the aggregating agent means the content of each aggregating agent.

In the column of "Compound (1)", "Y" was described in a case where the surfactant corresponded to the compound (1), and "N" was described in a case where the surfactant did not correspond to the compound (1).

The "ratio of EO chain" means a proportion of a total molecular weight of the ethylene oxide chain to the molecular weight of the surfactant.

The "compound (1)/resin particles" means a mass ratio of the content of the compound (1) to the content of the resin particles.

[Table 1]

| | Resin particles | | Aggregating agent | | | Surfactant | | | | | | Compound (1)/Resin particles | Evaluation | | |
|---|---|---|---|---|---|---|---|---|---|---|---|---|---|---|---|
| | Type | Content (% by mass) | Ca acetate monohydrate | Mg acetate tetrahydrate | Malonic acid | Type | Compound (1) | Content (% by mass) | HLB value | Cloud point | Ratio of EO chain (%) | | Lamination strength | Dot diameter | Storage stability |
| Example1 | Polyether-based urethane resin | 10 | 4 | 4 | - | PE-74 | Y | 2 | 8.1 | 56 | 34 | 0.20 | AA | A | A |
| Example2 | Polyether-based urethane resin | 10 | 4 | 4 | - | PE-75 | Y | 2 | 10.1 | 69 | 41 | 0.20 | AA | A | A |
| Example3 | Polyether-based urethane resin | 10 | 4 | 4 | - | PE-78 | Y | 2 | 15.6 | 110 | 78 | 0.20 | C | C | A |
| Example4 | Polyether-based urethane resin | 10 | 4 | 4 | - | L-64 | Y | 2 | 12.5 | 58 | 40 | 0.20 | AA | A | A |
| Example5 | Polyether-based urethane resin | 10 | 4 | 4 | - | L-44 | Y | 2 | 13.5 | 70 | 40 | 0.20 | AA | A | A |
| Example6 | Polyether-based urethane resin | 10 | 4 | 4 | - | PE-74 | Y | 0.6 | 8.1 | 56 | 34 | 0.06 | AA | A | A |
| Example7 | Polyether-based urethane resin | 10 | 4 | 4 | - | PE-74 | Y | 3 | 8.1 | 56 | 34 | 0.30 | AA | A | A |
| Example8 | Polyether-based urethane resin | 10 | 4 | 4 | - | PE-74 | Y | 4 | 8.1 | 56 | 34 | 0.40 | B | B | A |
| Example9 | Polyether-based urethane resin | 10 | 4 | 4 | - | PE-74 | Y | 0.4 | 8.1 | 56 | 34 | 0.04 | B | B | A |
| Example10 | Polyether-based urethane resin | 20 | 4 | 4 | - | PE-74 | Y | 0.6 | 8.1 | 56 | 34 | 0.03 | B | C | A |
| Example 11 | Polyether-based urethane resin | 8 | 4 | 4 | - | PE-74 | Y | 5 | 8.1 | 56 | 34 | 0.63 | C | B | A |
| Example 12 | Polyether-based urethane resin | 10 | 4 | 4 | - | PE-62 | Y | 2 | 5.2 | 30 | 20 | 0.20 | A | A | B |
| Example 13 | Polyether-based urethane resin | 10 | 4 | 4 | - | L-31 | Y | 2 | 1-7 | 39 | 10 | 0.20 | A | B | B |
| Example14 | Acrylic resin | 10 | 4 | 4 | - | PE-74 | Y | 2 | 8.1 | 56 | 34 | 0.20 | B | A | A |

EP 4 786 197 A1

| | Resin particles | | Aggregating agent | | | Surfactant | | | | | | Compound (1)/Resin particles | Evaluation | | |
|---|---|---|---|---|---|---|---|---|---|---|---|---|---|---|---|
| | Type | Content (% by mass) | Ca acetate monohydrate | Mg acetate tetrahydrate | Malonic acid | Type | Compound (1) | Content (% by mass) | HLB value | Cloud point | Ratio of EO chain (%) | | Lamination strength | Dot diameter | Storage stability |
| Example15 | Polyester-based urethane resin | 10 | 4 | 4 | - | PE-74 | Y | 2 | 8.1 | 56 | 34 | 0.20 | A | A | A |
| Example16 | Polycarbonate-based urethane resin | 10 | 4 | 4 | - | PE-74 | Y | 2 | 8.1 | 56 | 34 | 0.20 | AA | A | A |
| Example17 | Urethane resin A | 10 | 4 | 4 | - | PE-74 | Y | 2 | 8.1 | 56 | 34 | 0.20 | AA | A | A |
| Example18 | Polyether-based urethane resin | 10 | - | - | 5 | PE-74 | Y | 2 | 8.1 | 56 | 34 | 0.20 | AA | A | A |
| Comparative example1 | Polyether-based urethane resin | 10 | 4 | 4 | - | - | - | - | - | - | - | - | A | D | A |
| Comparative example2 | Polyether-based urethane resin | 10 | 4 | 4 | - | EMULGEN 103 | N | 2 | 8.1 | - | - | - | D | B | B |
| Comparative example3 | Polyether-based urethane resin | 10 | 4 | 4 | - | E1010 | N | 2 | 13.5 | 42 | - | - | B | D | B |
| Comparative example4 | Polyether-based urethane resin | 10 | 4 | 4 | - | 25R-2 | N | 2 | 4 | 30 | 20 | - | D | D | C |

As shown in Table 1, in Examples 1 to 18, it was found that the pretreatment liquid contained resin particles, a surfactant, an aggregating agent, and water, the surfactant contained the compound (1), and the aggregating agent contained at least one selected from the group consisting of a polyvalent metal compound and an organic acid, so that the dot diameter of the ink to be applied was large, and the lamination strength was excellent in a case of manufacturing the laminate.

On the other hand, in Comparative Example 1, it was found that the surfactant was not contained, so that the spreading of the dot was insufficient.

In Comparative Examples 2 to 4, it was found that the compound (1) was not contained, and the surfactant that did not correspond to the compound (1) was contained, so that it was not possible to achieve both the spreading of the dot and the lamination strength.

In Example 5, since the HLB value of the compound (1) was 15.0 or less, it was found that the spreading of the dot and the lamination strength were excellent as compared with Example 3.

In Example 1, since the cloud point of the compound (1) was 50°C or higher, it was found that the spreading of the dot and the lamination strength were excellent as compared with Example 13.

In Example 1, since the resin particles were particles containing a urethane resin, it was found that the lamination strength was excellent as compared with Example 14.

In Examples 1 and 16, since the resin particles were particles containing at least one selected from the group consisting of a polyether urethane resin and a polycarbonate urethane resin, it was found that the lamination strength was excellent as compared with Example 15.

In Example 17, since the resin particles contained a unit derived from a polycyclic aliphatic diol, it was found that the lamination strength was excellent as compared with Example 15.

In Example 12, since the proportion of the total molecular weight of the ethylene oxide chain to the molecular weight of the compound (1) was 15% or more, it was found that the dot diameter was larger than that in Example 13.

In Example 2, since the proportion of the total molecular weight of the ethylene oxide chain to the molecular weight of the compound (1) was 50% or less, it was found that the spreading of the dot and the lamination strength were excellent as compared with Example 3.

In Example 6, since the content of the compound (1) was 0.5% by mass or more, it was found that the spreading of the dot and the lamination strength were excellent as compared with Example 9.

In Example 7, since the content of the compound (1) was 3% by mass or less, it was found that the spreading of the dot and the lamination strength were excellent as compared with Example 8.

In Example 6, since the mass ratio of the content of the compound (1) to the content of the resin particles was 0.05 or more, it was found that the spreading of the dot and the lamination strength were excellent as compared with Example 9.

In Example 8, since the mass ratio of the content of the compound (1) to the content of the resin particles was 0.50 or less, it was found that the lamination strength was excellent as compared with Example 11.

Next, the pretreatment liquid, the cyan ink 2, and the white ink 1 were applied onto the base material in this order to obtain a printed material. The image recording method was the same as in Example 1 and the like. The obtained printed material was evaluated by the same method as in Example 1 and the like.

The evaluation results are shown in Table 2.

[Table 2]

| | Aggregating agent | | | | | | Surfactant | | | | | | Compound (1)/Resin particles | Organic solvent | | Evaluation | | |
|---|---|---|---|---|---|---|---|---|---|---|---|---|---|---|---|---|---|---|
| | Ca acetate monohydrate | Mg acetate tetrahydrate | Ca lactate pentahydrate | Mg lactate trihydrate | Ca formate | Mg formate dihydrate | Type | Compound (1) | Content (% by mass) | HLB value | Cloud point | Ratio of EO chain (%) | | Type | Content (% by mass) | Lamination strength | Dot diameter | Storage stability |
| Example21 | 4 | 4 | - | - | - | - | PE-74 | Y | 1 | 8.1 | 56 | 34 | 0.1 | PD | 1 | AA | A | A |
| Example22 | 4 | 4 | - | - | - | - | PE-75 | Y | 1 | 10.1 | 69 | 41 | 0.1 | PD | 1 | AA | A | A |
| Example23 | 4 | 4 | - | - | - | - | PE-74 | Y | 1 | 8.1 | 56 | 34 | 0.1 | 2P | 4 | AA | A | A |
| Example24 | 4 | 4 | - | - | - | - | PE-75 | Y | 1 | 10.1 | 69 | 41 | 0.1 | 2P | 4 | AA | A | A |
| Example25 | 4 | 4 | - | - | - | - | PE-74 | Y | 1 | 8.1 | 56 | 34 | 0.1 | - | - | AA | A | A |
| Example26 | 4 | 4 | - | - | - | - | PE-75 | Y | 1 | 10.1 | 69 | 41 | 0.1 | - | - | AA | A | A |
| Example27 | 3 | 3 | - | - | - | - | PE-75 | Y | 1 | 10.1 | 69 | 41 | 0.1 | - | - | AA | A | A |
| Exaniple28 | 4.5 | 4.5 | - | - | - | - | PE-75 | Y | 1 | 10.1 | 69 | 41 | 0.1 | - | - | AA | A | A |
| Example29 | - | 8 | - | - | - | - | PE-75 | Y | 1 | 10.1 | 69 | 41 | 0.1 | - | - | AA | A | A |
| Example30 | 8 | - | - | - | - | - | PE-75 | Y | 1 | 10.1 | 69 | 41 | 0.1 | - | - | AA | A | A |
| Example31 | 4 | - | - | 4 | - | - | PE-75 | Y | 1 | 10.1 | 69 | 41 | 0.1 | - | - | AA | A | A |
| Example32 | 4 | - | - | - | - | 2.5 | PE-75 | Y | 1 | 10.1 | 69 | 41 | 0.1 | - | - | AA | A | A |
| Example33 | - | - | 4.5 | 4 | - | - | PE-75 | Y | 1 | 10.1 | 69 | 41 | 0.1 | - | - | AA | A | A |
| Example34 | - | - | - | 4 | 2.5 | - | PE-75 | Y | 1 | 10.1 | 69 | 41 | 0.1 | - | - | AA | A | A |
| Example35 | - | 4 | - | 4 | - | - | PE-75 | Y | 1 | 10.1 | 69 | 41 | 0.1 | - | - | AA | A | A |
| Example36 | - | - | - | 4 | - | 2.5 | PE-75 | Y | 1 | 10.1 | 69 | 41 | 0.1 | - | - | AA | A | A |
| Example37 | - | - | 4.5 | - | 2.5 | - | PE-75 | Y | 1 | 10.1 | 69 | 41 | 0.1 | - | - | AA | A | A |
| Example38 | 4 | - | 4.5 | - | - | - | PE-75 | Y | 1 | 10.1 | 69 | 41 | 0.1 | - | - | AA | A | A |

As shown in Table 2, in Examples 21 to 38, it was found that the dot diameter of the ink to be applied was large, and the lamination strength was excellent in a case of manufacturing the laminate.

Next, printed materials were obtained using ink sets 1 to 3.

In the ink set 1, the cyan ink 2, the magenta ink 1, the yellow ink 1, and the black ink 1 were used, and the pretreatment liquid, the cyan ink 2, the magenta ink 1, the yellow ink 1, the black ink 1, and the white ink 2 were applied onto the base material in this order.

In the ink set 2, the cyan ink 3, the magenta ink 2, the yellow ink 2, and the black ink 2 were used, and the pretreatment liquid, the cyan ink 3, the magenta ink 2, the yellow ink 2, the black ink 2, and the white ink 3 were applied onto the base material in this order.

In the ink set 3, the cyan ink 2, the magenta ink 2, the yellow ink 2, and the black ink 2 were used, and the pretreatment liquid, the cyan ink 2, the magenta ink 2, the yellow ink 2, the black ink 2, and the white ink 2 were applied onto the base material in this order.

In the ink sets 1 to 3, the pretreatment liquids of Examples 21 to 38 were used as the pretreatment liquid, respectively.

The obtained printed material was evaluated by the same method as in Example 1 and the like, except that the following points were changed.

In the evaluation of the lamination strength, in a case where only the cyan ink was used, as described above, the cyan ink was applied in the form of a solid image at Duty 100%. On the other hand, in a case where the ink set was used, the cyan ink, the magenta ink, the yellow ink, and the black ink were applied in the form of a solid image at Duty 25%, respectively.

In the evaluation of the dot diameter, in a case where only the cyan ink was used, as described above, an image of Duty 10% was recorded. On the other hand, in a case where the ink set was used, the cyan ink, the magenta ink, the yellow ink, and the black ink were recorded by superimposing images of Duty 2.5%, respectively.

In any of the ink sets 1 to 3, the evaluation result of the lamination strength was AA, and the evaluation result of the dot diameter was A.

The entire disclosure of Japanese Patent Application No. 2023-166468, filed September 27, 2023, is incorporated into the present specification by reference. In addition, all documents, patent applications, and technical standards described in the present specification are herein incorporated by reference to the same extent that each individual document, patent application, or technical standard was specifically and individually indicated to be incorporated by reference.

## Claims

1. A pretreatment liquid for an ink jet ink, comprising:

    resin particles;
    a surfactant;
    an aggregating agent; and
    water,
    wherein the surfactant comprises a compound represented by Formula (1), and
    the aggregating agent comprises at least one selected from the group consisting of a polyvalent metal compound and an organic acid,

$$H(OCH_2CH_2)_x(OCH(CH_3)CH_2)_y(OCH_2CH_2)_z\text{-OH}: \qquad (1)$$

    in Formula (1), x and z are each independently an integer of 1 or more, y is an integer of 1 to 500, and x + z is an integer of 2 to 1,000.

2. The pretreatment liquid for an ink jet ink according to claim 1,
    wherein the compound represented by Formula (1) has an HLB value of 15.0 or less.

3. The pretreatment liquid for an ink jet ink according to claim 1,
    wherein the compound represented by Formula (1) has a cloud point of 50°C or higher.

4. The pretreatment liquid for an ink jet ink according to claim 1,
    wherein the resin particles are particles comprising a urethane resin.

5. The pretreatment liquid for an ink jet ink according to claim 4,
wherein the particles comprising the urethane resin are particles comprising at least one selected from the group consisting of a polyether urethane resin and a polycarbonate urethane resin.

6. The pretreatment liquid for an ink jet ink according to claim 4,
wherein the urethane resin comprised in the resin particles comprises a unit derived from a polycyclic aliphatic diol.

7. The pretreatment liquid for an ink jet ink according to claim 1,
wherein a proportion of a total formula weight of $(OCH_2CH_2)_x$ and $(OCH_2CH_2)_z$ relative to a molecular weight of the compound represented by Formula (1) is 15% to 50%.

8. The pretreatment liquid for an ink jet ink according to claim 1,
wherein a content of the compound represented by Formula (1) is 0.5% by mass to 3% by mass with respect to a total amount of the pretreatment liquid for an ink jet ink.

9. The pretreatment liquid for an ink jet ink according to claim 1,
wherein a mass ratio of a content of the compound represented by Formula (1) to a content of the resin particles is 0.05 to 0.50.

10. The pretreatment liquid for an ink jet ink according to claim 1, which is used for image recording on an impermeable base material.

11. An ink set comprising:

   the pretreatment liquid for an ink jet ink according to any one of claims 1 to 10; and
   an ink jet ink comprising water and a pigment.

12. A surface-treated base material comprising:

   an impermeable base material; and
   a pretreatment layer disposed on the impermeable base material, the pretreatment layer comprising a solid content of the pretreatment liquid for an ink jet ink according to any one of claims 1 to 10.

13. An image recording method comprising:

   a step of applying the pretreatment liquid for an ink jet ink according to any one of claims 1 to 10 onto an impermeable base material; and
   a step of applying an ink jet ink comprising water and a pigment onto the impermeable base material to which the pretreatment liquid for an ink jet ink has been applied, using an ink jet recording method, to record an image.

14. A manufacturing method of a laminate, comprising:

   a step of obtaining a printed material that includes the impermeable base material and an image disposed on the impermeable base material by the image recording method according to claim 13; and
   a step of laminating a base material for lamination on a side of the printed material on which the image is disposed, to obtain a laminate.

15. A printed material comprising:

   an impermeable base material; and
   an image disposed on the impermeable base material,
   wherein the image includes
   a pretreatment layer comprising a solid content of the pretreatment liquid for an ink jet ink according to any one of claims 1 to 10, and
   an ink layer disposed on the pretreatment layer and comprising a pigment.

16. A laminate comprising:

the printed material according to claim 15; and
a base material for lamination that laminates a side of the printed material on which the image is provided.

## INTERNATIONAL SEARCH REPORT

| | International application No. |
|---|---|
| | **PCT/JP2024/030523** |

### A. CLASSIFICATION OF SUBJECT MATTER

*B41M 5/00*(2006.01)i; *B41J 2/01*(2006.01)i; *C09D 11/322*(2014.01)i
FI: B41M5/00 132; C09D11/322; B41M5/00 112; B41M5/00 100; B41J2/01 501; B41J2/01 123

According to International Patent Classification (IPC) or to both national classification and IPC

### B. FIELDS SEARCHED

Minimum documentation searched (classification system followed by classification symbols)

B41M5/00; B41J2/01; C09D11/322

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2015-51628 A (CANON KABUSHIKI KAISHA) 19 March 2015 (2015-03-19) paragraphs [0041]-[0069] | 1-16 |
| A | JP 2019-111763 A (TOYO INK SC HOLDINGS CO., LTD.) 11 July 2019 (2019-07-11) paragraphs [0035]-[0099], [0183]-[0242] | 1-16 |
| A | JP 2010-52262 A (FUJIFILM CORPORATION) 11 March 2010 (2010-03-11) paragraphs [0012]-[0029], [0121]-[0157] | 1-16 |
| A | JP 2010-46918 A (FUJIFILM CORPORATION) 04 March 2010 (2010-03-04) paragraphs [0014]-[0029], [0120]-[0159] | 1-16 |
| A | JP 2011-178033 A (FUJIFILM CORPORATION) 15 September 2011 (2011-09-15) paragraphs [0135]-[0162] | 1-16 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **24 October 2024** | **05 November 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/030523**

| Patent document cited in search report | | | Publication date (day/month/year) | Patent family member(s) | | | Publication date (day/month/year) |
|---|---|---|---|---|---|---|---|
| JP | 2015-51628 | A | 19 March 2015 | US | 2015/0037502 | A1 | |
| | | | | paragraphs [0040]-[0072] | | | |
| | | | | EP | 2835266 | A1 | |
| | | | | CN | 104339904 | A | |
| JP | 2019-111763 | A | 11 July 2019 | US | 2021/0130639 | A1 | |
| | | | | paragraphs [0048]-[0145], [0269]-[0358] | | | |
| | | | | EP | 3733425 | A1 | |
| JP | 2010-52262 | A | 11 March 2010 | US | 2010/0055325 | A1 | |
| | | | | paragraphs [0016]-[0049], [0215]-[0314] | | | |
| JP | 2010-46918 | A | 04 March 2010 | US | 2010/0047456 | A1 | |
| | | | | paragraphs [0017]-[0053], [0235]-[0346] | | | |
| JP | 2011-178033 | A | 15 September 2011 | US | 2011/0211014 | A1 | |
| | | | | paragraphs [0190]-[0239] | | | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021091765 A
- JP 2002079739 A
- JP 2001247787 A
- JP 2013001854 A
- JP 2002012607 A
- JP 2002188025 A
- JP 2003026978 A
- JP 2003342503 A
- JP 54059936 A
- JP S5459936 A
- JP 2003306623 A
- JP 2022146167 A
- JP 2023166468 A

**Non-patent literature cited in the description**

- Encyclopedia of Pigments. 2000
- **W. HERBST** ; **K. HUNGER**. Industrial Organic Pigments